# EUROPEAN PATENT SPECIFICATION

(11) **EP 0 602 650 B1**
(45) Date of publication and mention of the grant of the patent: **10.03.1999**
(21) Application number: 93120336.8
(22) Date of filing: 16.12.1993
(51) Int. Cl.: H04N 1/32

(54) **Facsimile apparatus**
Faksimilegerät
Dispositif de fac-similé

(30) Priority: 17.12.1992 JP 337291/92; 27.08.1993 JP 212713/93
(43) Date of publication of application: 22.06.1994
(73) Proprietor: CANON KABUSHIKI KAISHA, Tokyo (JP)
(72) Inventor: Yanagisawa, Kazuto, Tokyo (JP)
(74) Representative: Pellmann, Hans-Bernd, Dipl.-Ing.

(56) References cited:
- EP-A- 0 419 363
- EP-A- 0 452 865
- PATENT ABSTRACTS OF JAPAN vol. 15, no. 121 (E-1049)25 March 1991 & JP-A-03 009 647 (TOKYO ELECTRIC CO., LTD.) 17 January 1991

## Description

### SPECIFICATION

### BACKGROUND OF THE INVENTION

### Field of the Invention:

This invention relates to a communication apparatus and, more particularly, to a communication apparatus such as a facsimile apparatus in which an incoming call is terminated without ringing.

### Description of the Related Art:

In a conventional communication apparatus such as a facsimile apparatus to which an externally provided telephone is connected, the external telephone is disconnected from the communication line internally of the apparatus in order to realize the non-ringing terminating function. The specification of Japanese Patent Application Laid-Open (KOKAI) No. JP-A-59135964 discloses art in which an off-hook detecting circuit for detecting the status of the telephone is connected in parallel with a call (CI) detecting circuit. At the time of non-ringing termination, the telephone is disconnected from the line and connected to the off-hook detecting circuit. Therefore, even at the time of non-ringing termination, the telephone is reconnected to the line automatically if the off-hook state is detected.

However, in the prior art described above, the change is made on the side of the communication apparatus without giving much consideration to the effects upon the communication line. Accordingly, under conditions in which solely the calling circuit is connected to the communication line when the apparatus is in the standby state upon terminating a call without ringing, a high impedance results. A condition such as this often occurs in other apparatus as well. In general, when a terminal is in an unused state (the standby state) with respect to a public telephone line, terminating at a high impedance is undesirable. For example, in a case where an apparatus is checked from the line side, often the apparatus is regarded as being unconnected even though it is connected. In addition, there is an overseas PTT that does not recognize a high-impedance with respect to a line.

EP-A-0 419 363 discloses a communication system according to the preamble of claim 1. This communication system comprises a control circuit serving as a detecting means for detecting a call signal from a communication line and a communication means for performing communication in response to a detection of the call signal.

### SUMMARY OF THE INVENTION

Accordingly, an object of the present invention is to provide a communication apparatus in which high-impedance termination is eliminated as seen from a communication line when the apparatus is in the standbv state.

Another object of the present invention is to provide a communication apparatus in which high-impedance termination is eliminated as seen from a communication line in non-ringing termination in a facsimile apparatus.

According to the present invention, the foregoing objects are attained by a communication apparatus as set out in claim 1.

A facsimile apparatus for performing non-ringing termination according to the present invention comprises ringing means connected to a line in case of termination with ringing, non-ringing setting means for disconnecting the ringing means from the line and connecting pseudo-terminating means to the line in case of non-ringing termination, call detecting means for detecting a call signal from the line, and communicating means connected in response to detection of the call signal.

In the arrangement described above, pseudo-termination is provided when a communication apparatus, namely a facsimile apparatus and an externally connected telephone, is in the unused state (standby state). This makes it possible to prevent the occurrence of undesirable high impedance with respect to a communication line (public telephone network).

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a block diagram illustrating part of a facsimile apparatus according to an embodiment of the present invention;
Fig. 2 is a circuit diagram illustrating an example of a pseudo-terminating circuit according to the embodiment; and
Fig. 3 is a circuit diagram illustrating an example of a call detecting circuit according to the embodiment.

### DESCRIPTION OF THE PREFERRED EMBODIMENTS

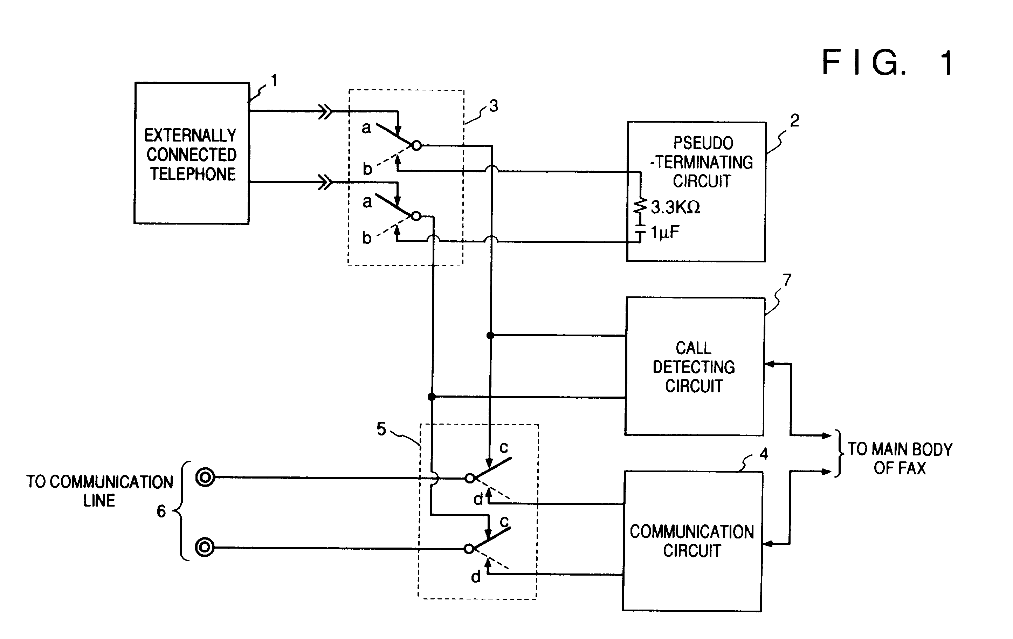

Fig.1 is a diagram illustrating part of a facsimile apparatus, which is a communication apparatus according to a preferred embodiment of the invention, as well as the connection of the apparatus to a line.

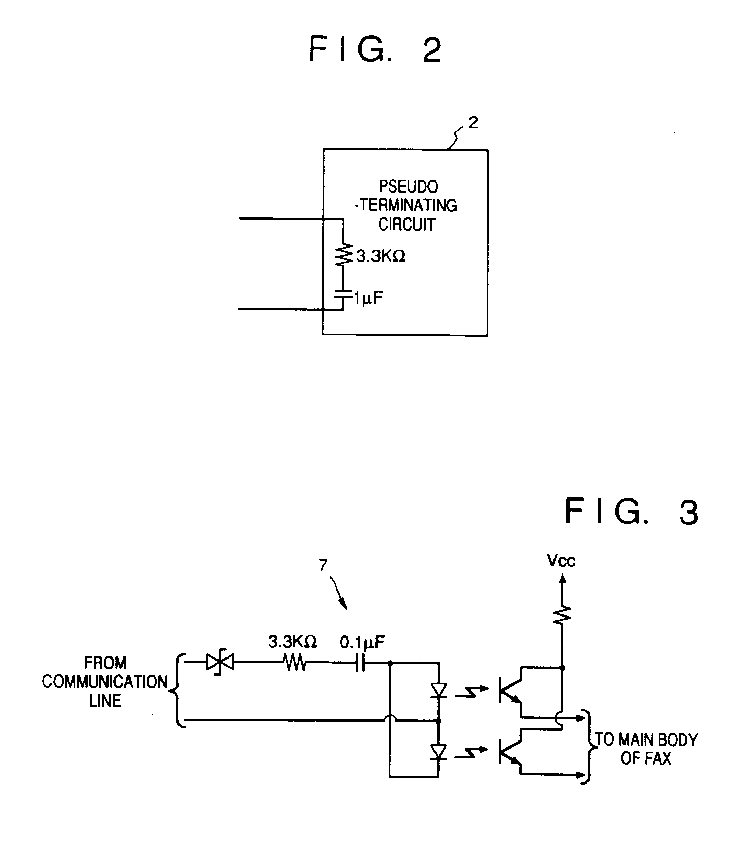

Numeral 1 denotes an externally connected telephone that rings in response to a call signal from a line. The other portions constitute a facsimile apparatus for realizing the embodiment. Specifically, numeral 2 denotes a pseudo-terminating circuit constituted by a resistor and a capacitor, etc. Though the pseudo-terminating circuit 2 in the illustrated example is composed of a 3.3 KΩ resistor and a 1µF capacitor serially connected as shown in Fig. 2, other suitable circuits are appropriate depending upon the characteristics of the communication line. A relay 3 is for switching between the external telephone 1 and the pseudo-terminating circuit 2, and a communication circuit 4 such as a modem is connected to the main body of the facsimile apparatus to send and receive data. A relay 5 is for switching between the side of the external telephone 1 and pseudo-terminating circuit 2 and the side of the communicating circuit 4. Numeral 6 denotes a line connector for connecting the facsimile apparatus to the line. A call detecting circuit 7 detects a call signal from the line. An example of the call detecting circuit 7 is shown in Fig. 3. In the call detecting circuit 7, a 33KΩ resistor is connected to make an impedance of the call detecting circuit 7 from the line side sufficiently larger, a 0.1 µF capacitor to separate the call detecting circuit 7 from the line in DC component, a light-emitting diode is caused to emit light based on the call signal, and the light is sensed by a light-receiving element, thereby giving notice of the call to a controller of the facsimile apparatus. It should be noted that the relays 3 and 5 may be changed over by an instruction from the operator or automatically during the course of control by the controller of the facsimile apparatus.

In a case where the facsimile apparatus is in a standby state for reception using a ringing tone, the relay 3 in the above-described arrangement is connected to the a side (external telephone 1) and the relay 5 is connected to the c side (external telephone 1), whereby the external telephone 1 is connected to the line via the line connector 6. When a call (ringing signal) arrives from the line under these conditions, the ringer of the telephone 1 rings. At the same time, the call signal is detected by the call detecting circuit 7. If the signal is a significant signal (which, in the simplest example, depends upon the number of call signals), the relay 5 is connected to the d side (communication circuit 4) so that a communication state is established. Accordingly, the call is received and accompanied by a ringing tone and a high impedance is not produced with respect to the line during standby and during communication.

In a case where the facsimile apparatus is in a standby state for reception without using a ringing tone, the relay 3 in the above-described arrangement is connected to the b side (pseudo-terminating circuit 2) and the relay 5 is connected to the c side (pseudo-terminating circuit 2), whereby the pseudo-terminating circuit 2 is connected to the line. When a call signal arrives from the line under these conditions, the ringer of the telephone 1 will not ring because the telephone has been disconnected. At the same time, the call signal is detected by the call detecting circuit 7 connected to the line. If the signal is a significant signal, the relay 5 is connected to the d side (communication circuit 4) so that a communication state is established. This series of operations represents automatic reception without ringing. In this case also a high impedance is not produced because the pseudo-terminating circuit 2 is connected with respect to the line.

In the illustrated embodiment, the relays 3 and 5 are provided to control the connection of the pseudo-terminating circuit 2. However, the invention is not limited in terms of the position at which the pseudo-terminating circuit 2 is disposed. Other arrangements of the pseudo-terminating circuit that will not produce a high impedance are conceivable and these also are covered by the present invention. Further, the characteristics of the pseudo-terminating circuit are related to the characteristics of the line and telephone or communication circuit, and under prescribed conditions the pseudo-terminating circuit may be permanently connected to the line without requiring switching. In addition, there are no restrictions whatsoever upon the construction of the pseudo-terminating circuit.

Thus, as described above, by providing a pseudo-terminating circuit, or by switching between an externally connected telephone and a pseudo-terminating circuit, it is possible to prevent an undesirable situation in which unwanted high impedance is produced with respect to a line. In addition, since there is an overseas PTT that does not recognize high impedance with respect to a line, the present invention provides an essential technique for the purpose of realizing a non-ringing terminating function.

Though an embodiment has been described taking a facsimile apparatus as an example, the communication apparatus can be used in many environments which are also covered by the present invention.

The present invention can be applied to a system constituted by a plurality of devices or to an apparatus comprising a single device. Furthermore, it goes without saying that the invention is applicable also to a case where the object of the invention is attained by supplying a program to a system or apparatus.

As many apparently widely different embodiments of the present invention can be made without departing from the spirit and scope thereof, it is to be understood that the invention is not limited to the specific embodiments thereof except as defined in the appended claims.

High-impedance termination of an incoming call in a communication apparatus is eliminated by an apparatus which includes call detecting circuit (7) for detecting a call signal from a line, communicating circuit (4) connected in response to detection of the call signal, and pseudo-terminating circuit (2) arranged so as to be connected to the line. Further, high-impedance termination in non-ringing termination of a call in a facsimile apparatus is eliminated by an apparatus which includes telephone (1) connected to a line in case of termination with ringing, and non-ringing setting relay (3) for disconnecting the telephone (1) from the line and connecting pseudo-terminating circuit (2) to the line in case of non-ringing termination.

## Claims

1. A communication apparatus comprising:
detecting means (7) for detecting a call signal from a line (6);
communication means (4) for performing communication in response to detection of the call signal;
**characterized by**
pseudo-terminating means (2) and
a relay (5) for selectively connecting said communication means (4) or said pseudo-terminating means (2) to the line (6).

2. The apparatus according to claim 1,
**characterized in that**
said pseudo-terminating means (2) is connected to the line (6) in parallel with said detecting means (7).

3. The apparatus according to claim 1 or 2,
**characterized by**
a relay (3) for selectively connecting said pseudo-terminating means (2) or a telephone (1) to the line (6).

4. The apparatus according to claim 3,
**characterized in that**
said relay (3) connects said telephone (1) to the line (6) in case of termination ringing and connects said pseudo-terminating means (2) to the line (6) in case of non-ringing termination.

5. The apparatus according to any one of the preceding claims,
**characterized in that**
said communicating means (4) performs facsimile communication.

## Patentansprüche

1. Übertragungsgerät mit
einer Erfassungseinrichtung (7) zur Erfassung eines Rufsignals aus einer Leitung (6) und
einer Übertragungseinrichtung (4) zur Durchführung einer Übertragung im Ansprechen auf die Erfassung des Rufsignals,
**gekennzeichnet durch**
eine Pseudo-Abschlußeinrichtung (2) und
eine Relais (5) zur wahlweisen Verbindung der Übertragungseinrichtung (4) oder der Pseudo-Abschlußeinrichtung (2) mit der Leitung (6).

2. Gerät nach Anspruch 1,
**dadurch gekennzeichnet, daß**
die Pseudo-Abschlußeinrichtung (2) parallel zu der Erfassungseinrichtung (7) mit der Leitung (6) verbunden ist.

3. Gerät nach Anspruch 1 oder 2,
**gekennzeichnet durch**
ein Relais (3) zur wahlweisen Verbindung der Pseudo-Abschlußeinrichtung (2) oder eines Telefons (1) mit der Leitung (6).

4. Gerät nach Anspruch 3,
**dadurch gekennzeichnet, daß**
das Relais (3) das Telefon (1) im Fall eines Abschlusses mit Läuten mit der Leitung (6) verbindet und die Pseudo-Abschlußeinrichtung (2) im Fall eines Abschlusses ohne Läuten mit der Leitung (6) verbindet.

5. Gerät nach einem der vorangehenden Ansprüche,
**dadurch gekennzeichnet, daß**
die Übertragungseinrichtung (4) eine Faksimileübertragung durchführt.

## Revendications

1. Appareil de communication comprenant:
des moyens de détection (7) pour détecter un signal d'appel provenant d'une ligne (6) ;
des moyens de communication (4) pour effectuer une communication en réponse à la détection du signal d'appel;
caractérisé par
des moyens de pseudo-terminaison (2) et
un relais (5) pour connecter sélectivement lesdits moyens de communication (4) ou lesdits moyens de pseudo-terminaison (2) à la ligne (6).

2. Appareil selon la revendication 1,
caractérisé en ce que
lesdits moyens de pseudo-terminaison (2) sont connectés à la ligne (6) en parallèle avec lesdits moyens de détection (7).

3. Appareil selon la revendication 1 ou 2,
caractérisé par
un relais (3) pour connecter sélectivement lesdits moyens de pseudo-terminaison (2) ou un téléphone (1) à la ligne (6).

4. Appareil selon la revendication 3,
caractérisé en ce que
ledit relais (3) connecte ledit téléphone (1) à la ligne (6) dans le cas d'une sonnerie de terminaison et connecte lesdits moyens de pseudo-terminaison (2) à la ligne (6) dans le cas d'une terminaison sans sonnerie.

5. Appareil selon l'une quelconque des revendications précédentes,
caractérisé en ce que
lesdits moyens de communication (4) effectuent une communication par télécopie.
